# FASCICULE DE BREVET EUROPEEN

(11) **EP 2 530 022 B1**
(45) Date de publication et mention de la délivrance du brevet: **19.12.2018**
(21) Numéro de dépôt: 12169875.7
(22) Date de dépôt: 29.05.2012
(51) Int. Cl.: G01S 5/02, B64G 1/66, B64G 1/10, G01S 5/06

(54) **Système de localisation géographique d'un émetteur de signaux radioélectriques situeé à la surface de la terre, et procédé associé d'interférométrie distribuée**
Geografisches Lokalisierungssystem eines Funksignalsenders, das auf der Erdoberfläche angebracht ist, und damit verbundenes Verfahren der verteilten Interferometrie
System for geographical positioning of a radio-frequency signal transmitter located on the surface of the earth, and associated distributed interferometry method.

(30) Priorité: 01.06.2011 FR 1101682
(43) Date de publication de la demande: 05.12.2012
(73) Titulaire: Thales, 92400 Courbevoie (FR)
(72) Inventeur: Peyrotte, Christian, 31100 Toulouse (FR); Martinerie, Francis, 31860 Labarthe sur Lèze (FR); Thevenet, Jean-Baptiste, 31500 Toulouse (FR)
(74) Mandataire: Brunelli, Gérald

(56) Documents cités:
- US-A- 5 914 687
- US-A- 6 072 433
- US-A1- 2002 190 163
- YAO J ET AL: "The Associated Modeling and Precision Analysis of Spatial States and the Inter-Satellite Baseline of Formation Flying Satellites", GEOSCIENCE AND REMOTE SENSING SYMPOSIUM, 2006. IGARSS 2006. IEEE INTER NATIONAL CONFERENCE ON, IEEE, PI, 1 juillet 2006 (2006-07-01), pages 1255-1258, XP031179202, DOI: 10.1109/IGARSS.2006.324 ISBN: 978-0-7803-9510-7
- SANCHEZ R ET AL: "Design of a micro-satellite for precise formation flying demonstration", ACTA ASTRONAUTICA, PERGAMON PRESS, ELMSFORD, GB, vol. 59, no. 8-11, 1 octobre 2006 (2006-10-01), pages 862-872, XP027930692, ISSN: 0094-5765 [extrait le 2006-10-01]
- DEININGER W D ET AL: "Formation flying activities and capabilities at ball aerospace", AEROSPACE CONFERENCE, 2003. PROCEEDINGS. 2003 IEEE MARCH 8-15, 2003, PISCATAWAY, NJ, USA,IEEE, vol. 6, 8 mars 2003 (2003-03-08), pages 6_2599-6_2614, XP010660555, ISBN: 978-0-7803-7651-9

## Description

La présente invention porte sur un système de localisation géographique d'au moins un émetteur de signaux radioélectriques situé à la surface de la Terre, et un procédé associé d'interférométrie distribuée.

Des systèmes de localisation géographique ou géo-localisation d'au moins un émetteur de signaux radioélectriques situé à la surface de la Terre utilisant un ensemble de satellites équipés de récepteurs GPS (acronyme de "Global Positioning system" en langue anglo-saxonne pour système de positionnement global par satellites) sont connus. Il est possible de citer pour exemples le programme AIS acronyme d'"Automatic Identification System" en langue anglaise et le système ORBCOM.

De tels systèmes de localisation géographique d'émetteurs de signaux radioélectriques situés à la surface de la Terre sont fréquemment dépendants d'un système externe, le système GPS. Ainsi, en cas de panne du système GPS, ou d'imprécisions, ou de refus de partager les données par leur propriétaire, un tel système de localisation géographique, qui en dépend, serait alors inopérant ou d'une imprécision fortement augmentée.

Le document US 6 072 433 porte sur un système de localisation géographique d'au moins un émetteur de signaux radioélectriques situé à la surface de la Terre, utilisant deux interféromètre en cascade pour améliorer la précision finale.

Le document US 5 914 687 porte sur un système de localisation géographique d'au moins un émetteur de signaux radioélectriques situé à la surface de la Terre, utilisant des mesures différentes effectuées par un même dispositif d'interférométrie.

De tels systèmes sont limités en précision de localisation lorsque le segment spatial du système se limite à un satellite unique car la base-antenne formée ne dépasse en général pas la dizaine de mètres.

De tels systèmes sont limités en capacité de détection et de poursuite lorsque le système est distribué sur plusieurs satellites en raison de la difficulté à synchroniser les données et à les échanger entre satellites. La localisation est effectuée à posteriori, au sol.

Un but de l'invention est de proposer un système de localisation géographique d'un émetteur de signaux électriques située à la surface de la Terre, qui soit indépendant du système GPS, autonome, de précision accrue y compris en présence de manoeuvres des satellites, flexible, et possédant une interférométrie étendue, i.e. dont la base-antenne varie de quelques mètres à quelques dizaines de kilomètres.

Il est proposé, selon un aspect de l'invention, un système de localisation géographique d'au moins un émetteur de signaux radioélectriques situé à la surface de la Terre, comprenant :
- un ensemble de satellites munis d'antennes de réception adaptées pour recevoir lesdits signaux, formant un dispositif principal d'interférométrie étendue,
- un dispositif de métrologie relative inter-satellites de détermination des positions relatives desdits satellites entre-eux, comprenant au moins un capteur dédié de chaque satellite, ainsi que des moyens de communication inter-satellites,
- un dispositif de datation desdits signaux reçus à partir de ladite détermination des positions relatives desdits satellites entre-eux délivrées par ledit dispositif de métrologie relative inter-satellites,
- un dispositif secondaire d'interférométrie comprenant au moins un ensemble d'au moins trois antennes d'un satellite,
- une station de base au sol,
- un dispositif de transmission des mesures acquises sur les satellites vers la station de base au sol et
- des moyens de détermination de la position absolue d'au moins un des satellites,
l'ensemble de satellites comprenant un satellite principal et au moins un satellite secondaire, ledit satellite principal comprenant ledit dispositif de transmission comprenant une unique antenne, et étant adapté pour collecter l'ensemble desdits signaux reçus, desdites positions relatives et desdites datations transmises par ledit ensemble de satellites, et les transmettre à ladite station de station de base au sol, et des moyens de détermination d'une localisation géographique dudit émetteur disposés dans ledit satellite principal,
le dispositif secondaire d'interférométrie étant adapté pour fournir une localisation géographique approximative dudit émetteur adaptée pour servir d'initialisation pour une localisation géographique précise dudit émetteur par le dispositif principal d'interférométrie étendue.

Un tel système permet d'accéder à une détection autonome sensiblement en temps réel selon les capacités de calcul embarquées à bord des satellites, et à une précision améliorée de localisation lorsque le signal est harmonique et/ou dont l'analyse peut bénéficier d'une base-antenne étendue, proposée dans le cas présent par le dispositif principal d'interférométrie.

La présente invention est particulièrement utile dans le domaine de l'observation dans la bande radio fréquences ou RF passive, pour le repérage d'émetteurs terrestres, par exemple de type détection de balise de secours.

En outre, l'utilisation combinée d'un dispositif d'interférométrie secondaire et d'un dispositif de métrologie inter-satellites de détermination des positions relatives desdits satellites entre-eux, localisé sur un satellite donné, permet de lever l'ambigüité de cycles de phase porteuse avant d'étendre la précision de localisation via la base-antenne élargie du dispositif principal d'interférométrie.

En outre, l'utilisation combinée d'un dispositif d'interférométrie secondaire et d'un dispositif de métrologie inter-satellites de détermination des positions relatives desdits satellites entre-eux, localisé sur un satellite donné, permet de lever l'ambigüité de cycles de phase porteuse avant d'étendre la précision de localisation via la base-antenne élargie du dispositif principal d'interférométrie.

Le dispositif de métrologie inter-satellites peut comprendre un dispositif Radio-Fréquence de Vol en Formation ou FFRF (pour "Formation-Flying Radio Frequency" en langue anglaise), éventuellement complété par un dispositif de métrologie optique. L'utilisation de données issues de la métrologie inter-satellites permet de s'affranchir d'un système de positionnement par satellites tel le système GPS, et d'accéder à une précision accrue de positionnement relatif des satellites. Il permet, en outre, une synchronisation précise des mesures de signaux terrestres, qui peuvent être échangés via le lien de communication (par exemple du dispositif FFRF), ouvrant la possibilité d'un traitement à bord autonome des données et ainsi à la localisation d'émetteurs terrestres en temps réel.

L'utilisation de la métrologie inter-satellites permet également un contrôle autonome de la formation de satellites et apporte une flexibilité importante en terme de configuration (redondance possible du lien avec le sol, reconfiguration du rôle et de la position des satellites ...).

L'utilisation de la métrologie inter-satellites permet également d'envisager l'adaptation du système à tout type d'orbite (LEO, MEO, GEO, HEO, IGSO).

Ce mode de réalisation simplifie la réalisation de la transmission des données vers le sol, en donnant un rôle privilégié à l'un des satellites, qui pourra alors également être en charge du traitement ou prétraitement des mesures au préalable. Ce faisant, l'architecture des autres satellites pourra être simplifiée.

En effet, lorsque les mesures sont traitées à bord des satellites, le dispositif secondaire d'interférométrie peut être utilisé pour déterminer la localisation géographie de l'émetteur avec une précision grossière ou pour initialiser la localisation géographique précise de l'émetteur par le dispositif principal d'interférométrie. La base-antenne concernée est la distance séparant les antennes dédiées au sein du satellite concerné.

Le dispositif principal d'interférométrie peut alors être utilisé pour une localisation géographique de l'émetteur de précision accrue et la base-antenne concernée est la distance séparant les satellites, connues grâce au dispositif de métrologie inter-satellites. Ce mode de réalisation est permis grâce à la synchronisation précise et l'échange des mesures entre satellites, permettant de calculer une position angulaire à partir de la connaissance de la base antenne, sur des mesures synchronisée de différence de marche du signal.

Dans un mode de réalisation, lesdits moyens de détermination de la position absolue d'au moins un des satellites comprennent au moins un émetteur au sol de localisation connue.

En variante, lesdits moyens de détermination de la position absolue d'au moins un des satellites comprennent un récepteur d'un système de positionnement par satellites, tel GPS, GALILEO, ou DORIS.

Dans un mode de réalisation, au moins un desdits satellites comprend un dispositif de micro propulsion.

Ainsi, il est possible de modifier sur commande, avec précision, les distances relatives des antennes des satellites en cours de mesure, et de s'affranchir de biais de mesure.

Par exemple, lesdites antennes de réception sont adaptées pour recevoir des signaux électriques RF, acronyme de radiofréquences.

Ainsi, il est potentiellement possible de localiser tout type d'émetteur de signaux radiofréquence terrestre compatibles de la précision de détermination de la base antenne de mesure.

Dans un mode de réalisation, ledit dispositif de métrologie relative inter-satellites comprend un dispositif de Radio Fréquences de Vol en Formation, et éventuellement un dispositif de métrologie optique.

Selon un autre aspect de l'invention, il est également proposé un procédé de localisation géographique d'au moins un émetteur de signaux radioélectriques situé à la surface de la Terre, dans lequel on détermine des positions relatives et une synchronisation relative de satellites entre-eux par métrologie inter-satellites, et on date lesdits signaux reçus à partir de ladite détermination des positions relatives desdits satellites entre-eux.

L'invention sera mieux comprise à l'étude de quelques modes de réalisation décrits à titre d'exemples nullement limitatifs et illustrés par les dessins annexés sur lesquels :
- la figure 1 illustre schématiquement un système de localisation géographique d'un émetteur de signaux électriques selon un aspect de l'invention ; et
- la figure 2 illustre schématiquement un système de localisation géographique d'un émetteur de signaux électriques selon un autre aspect de l'invention.

Sur l'ensemble des figures, les éléments ayant les mêmes références sont similaires.

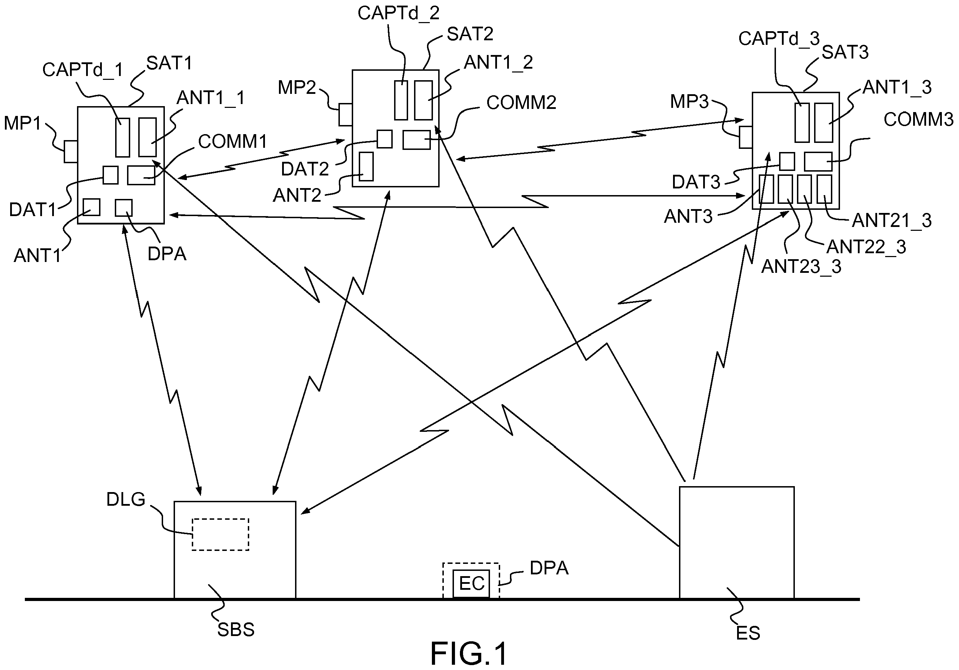

La figure 1 représente schématiquement un système de localisation géographique d'au moins un émetteur ES de signaux radioélectriques situé à la surface de la Terre, comprenant un ensemble de satellites, par exemple trois satellites SAT1, SAT2, et SAT3 munis respectivement d'antennes de réception ANT1, ANT2, et ANT3 adaptées pour recevoir les signaux émis par l'émetteur ES. En variante, le système de localisation géographique peut comprendre un nombre quelconque de satellites, supérieur ou égal à deux.

Le système comprend un dispositif principal d'interférométrie étendue comprenant au moins une antenne ANT1_1, ANT1_2, ANT1_3, de chaque satellite SAT1, SAT2, SAT3.

Le système comprend également un dispositif de métrologie relative inter-satellites de détermination des positions relatives desdits satellites SAT1, SAT2, et SAT3 entre-eux, comprenant au moins un capteur dédié, en l'espèce un capteur dédié CAPTd_1, CAPTd_2, et CAPTd_3 de chaque satellite SAT1, SAT2, et SAT3, ainsi que des modules de communication inter-satellites COMM1, COMM2, et COMM3.

Le système comprend, en outre, un dispositif de datation DAT1, DAT2, et DAT3 des signaux reçus, à partir de la détermination des positions relatives des satellites SAT1, SAT2, et SAT3 entre-eux délivrées par ledit dispositif de métrologie relative inter-satellites. Le dispositif de datation de l'exemple de réalisation de la figure 1 comprend les trois modules de datations DAT1, DAT2, et DAT3 respectivement montés sur les satellites SAT1, SAT2, et SAT3. Ainsi, la datation des mesures peut être synchronisée entre les satellites par le dispositif de métrologie relative inter-satellites.

Le dispositif de datation DAT1, DAT2, et DAT3 utilise des mesures de pseudo-distances des différents signaux émis par les satellites SAT1, SAT2, et SAT3 de la formation. La technique de corrélation de code RPN est utilisée pour identifier les biais de temps entre émetteurs et récepteurs. La datation précise utilise ensuite une technique de transfert de données (mesures des pseudo-distances) et de temps, pour synchroniser entre eux les horloges des satellites SAT1, SAT2, et SAT3. Ce temps de référence permet alors de dater, dans le même référentiel, les mesures des émetteurs radioélectriques au sol, captés par les satellites SAT1, SAT2, et SAT3.

Le système comprend également un dispositif secondaire d'interférométrie comprenant au moins un ensemble d'au moins trois antennes ANT21_3, ANT22_3, ANT23_3 d'un satellite, en l'espèce le troisième satellite SAT3, une station de base au sol SBS, et un module de détermination de la position absolue DPA d'au moins un des satellites, en l'espèce le premier satellite SAT1. Un satellite privilégié, en l'espèce le troisième satellite SAT3, fournit la référence de temps, par le dispositif secondaire d'interférométrie.

Le module de détermination de la position absolue DPA du premier satellite SAT1 comprend, comme illustré sur cet exemple au moins un émetteur au sol EC de localisation connue.

En variante, le module de détermination de la position absolue DPA d'au moins un des satellites peut comprendre un récepteur d'un système de positionnement par satellites.

Ce module de détermination d'une localisation géographique DPA, peut, par exemple, mettre en oeuvre des mesures de pseudo-distances et/ou Doppler effectuées à partir des signaux de liaisons de télécommunications entre la ou les stations de base au sol SBS et le satellite.

Au moins un des satellites SAT1, SAT2, et SAT3 comprend un dispositif de micro propulsion, en l'espèce, dans le mode de réalisation de la figure 1, chacun des satellites SAT1, SAT2, et SAT3 comprend un module de micro propulsion MP1, MP2, et MP3.

La station de base au sol SBS comprend un module de détermination d'une localisation géographique DLG. La technique de localisation au sol s'effectue avec le retour au sol des différentes mesures, datées, effectuées par les différents satellites.

En variante, le module de détermination d'une localisation géographique DLG peut être embarqué à bord d'un satellite.

En outre, les modules de datation DAT1, DAT2, DAT3, peuvent, par exemple, être réalisés en mettant en oeuvre l'enseignement du brevet européen EP 1 813 957 B1, et ainsi ne pas dépendre de l'utilisation de récepteurs GPS.

Ainsi, le module de datation DAT1, DAT2, DAT3 d'un satellite tire profit du dispositif de métrologie relative. Celui-ci peut mettre en oeuvre un procédé de mesures de pseudo-distance inter-satellites bi-directionnelles ("Two-Way" en langue anglaise), dont il extrait le biais de temps inter-satellites, permettant la datation relative des mesures de l'interféromètre principal avec précision. Le dispositif de métrologie peut également estimer les directions de transmission des signaux émis par les autres satellites.

La précision de localisation d'un tel système est améliorée par rapport aux systèmes connus mettant en oeuvre des récepteurs de type GPS, car la précision de positionnement relatif des satellites peut être abaissée en-dessous du centimètre, et la synchronisation en temps est inférieure à trois nanosecondes en temps réel, même en présence de manoeuvre des satellites.

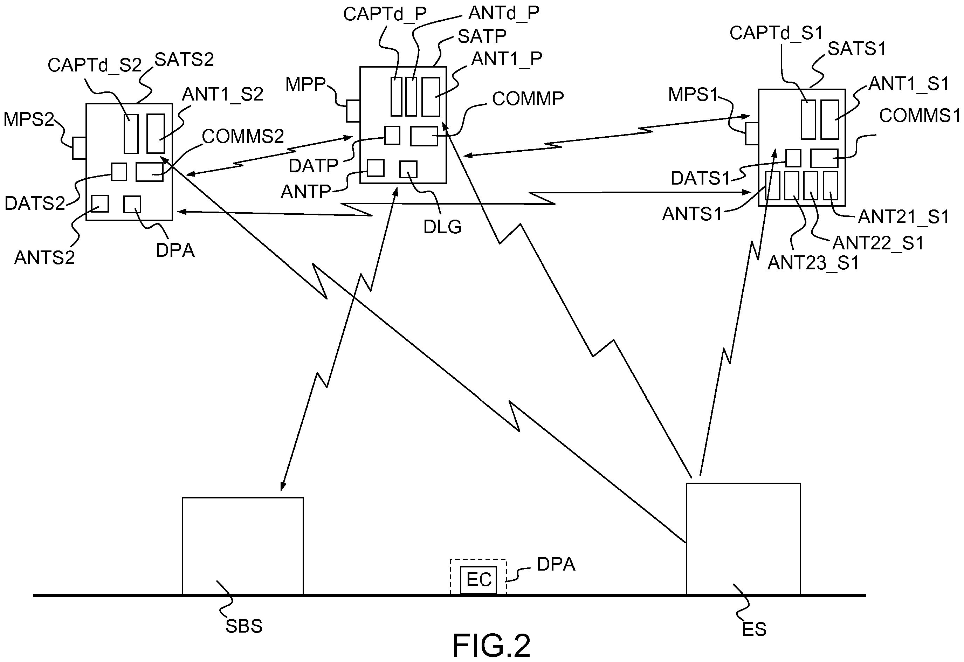

Sur la figure 2, est illustré schématiquement un autre mode de réalisation d'un système de localisation géographique, dans lequel l'ensemble de satellites SATP, SATS1, et SATS2, toujours au nombre de trois, de manière non limitative, comprend un satellite principal SATP et au moins un satellite secondaire, en l'espèce deux satellites secondaires, SATS1 et SATS2. Le satellite principal SATP est adapté pour collecter l'ensemble des signaux reçus, des positions relatives et des datations transmises par l'ensemble des satellites SATP, SATS1, SATS2, et les transmettre à la station de station de base au sol SBS. Les traitements de données peuvent être effectuées à bord du satellite principal SATP ou dans la station de base au sol SBS, notamment la détection, la poursuite et un premier niveau de géolocalisation. Aussi, un module de détermination de la localisation géographique DLG de l'émetteur ES peut être disposé dans le satellite principal SATP.

En variante, le module de détermination de la localisation géographique DLG de l'émetteur ES peut être disposé dans la station de base au sol SBS.

Les trois satellites principal SATP, et secondaires SATS1, et SATS2 sont munis respectivement d'antennes de réception ANTP, ANTS1, et ANTS2 adaptées pour recevoir les signaux émis par l'émetteur ES. En variante, le système de localisation géographique peut comprendre un nombre quelconque de satellites, supérieur ou égal à deux.

Le système comprend un dispositif principal d'interférométrie comprenant au moins une antenne ANT1_P, ANT1_S1, ANT1_S2, de chaque satellite SATP, SATS1, SATS2.

Le système comprend également un dispositif de métrologie relative inter-satellites de détermination des positions relatives des satellites SATP, SATS1, et SATS2 entre-eux, comprenant au moins un capteur dédié CAPTd_P, CAPTd_S1, CAPTd_S2, de chaque satellite SATP, SATS1, SATS2, ainsi que des modules de communication inter-satellites COMMP, COMMS1, COMMS2.

Le système comprend, en outre, un dispositif de datation DATP, DATS1, DATS2 des signaux reçus, à partir de la détermination des positions relatives des satellites SATP, SATS1, SATS2 entre-eux délivrées par ledit dispositif de métrologie relative inter-satellites, en l'occurrence le dispositif FFRF. Le dispositif de datation de l'exemple de réalisation de la figure 2 comprend les trois modules de datations DATP, DATS1, et DATS2 respectivement montés sur les satellites SATP, SATS1, et SATS2. Ainsi, la datation des mesures peut être synchronisée entre les satellites.

Le système comprend également un dispositif secondaire d'interférométrie comprenant au moins un ensemble d'au moins trois antennes ANT21_S1, ANT22_S1, ANT23_S1 d'un satellite, en l'espèce le satellite secondaire SATS1, une station de base au sol SBS, et un module de détermination de la position absolue DPA d'au moins un des satellites, en l'espèce le satellite secondaire SATS2. Un satellite privilégié, en l'espèce le satellite secondaire SATS2, fournit la référence de temps, par le dispositif secondaire d'interférométrie.

Le module de détermination de la position absolue DPA du premier satellite SAT1 comprend, comme illustré sur cet exemple au moins un émetteur au sol EC de localisation connue.

En variante, le module de détermination de la position absolue DPA d'au moins un des satellites peut comprendre un récepteur d'un système de positionnement par satellites.

Le module de détermination d'une localisation géographique DLG peut être embarqué à bord d'un satellite, en l'espèce le satellite principal SATP.

En variante, la station de base au sol SBS peut comprendre un module de détermination d'une localisation géographique DLG.

Le dispositif de datation de l'exemple de réalisation de la figure 2 comprend trois modules de datations DATP, DATS1, et DATS2 respectivement montés sur les satellites principal SATP, et secondaires SATS1, et SATS2.

En variante, un unique module de datation pourrait être disposé dans la station de base SBS au sol, en remplacement des trois modules de datations DATP, DATS1, et DATS2.

Au moins un des satellites principal SATP, et secondaires SATS1, et SATS2 comprend un dispositif de micro propulsion, en l'espèce, dans le mode de réalisation de la figure 2, chacun des satellites principal SATP, et secondaires SATS1, et SATS2 comprend un module de micro propulsion MPP, MPS1, et MPS2.

## Revendications

1. Système de localisation géographique d'au moins un émetteur (ES) de signaux radioélectriques situé à la surface de la Terre, comprenant :
- un ensemble de satellites (SAT1, SAT2, SAT3) munis d'antennes de réception (ANT1, ANT2, ANT3) adaptées pour recevoir lesdits signaux, formant un dispositif principal d'interférométrie étendue,
- un dispositif de métrologie relative inter-satellites de détermination des positions relatives desdits satellites (SAT1, SAT2, SAT3) entre-eux, comprenant au moins un capteur dédié (CAPTd_1, CAPTd_2, CAPTd_3) de chaque satellite (SAT1, SAT2, SAT3), ainsi que des moyens de communication inter-satellites (COMM1, COMM2, COMM3),
- un dispositif de datation (DAT1, DAT2, DAT3) desdits signaux reçus à partir de ladite détermination des positions relatives desdits satellites (SAT1, SAT2, SAT3) entre-eux délivrées par ledit dispositif de métrologie relative inter-satellites, à partir de mesures de pseudodistances par corrélation de code PRN et par synchronisation des horloges desdits satellites par transfert de temps entre satellites,
- un dispositif secondaire d'interférométrie comprenant au moins un ensemble d'au moins trois antennes (ANT21_3, ANT22_3, ANT23_3) d'un satellite,
- une station de base au sol (SBS),
- un dispositif de transmission des mesures acquises sur les satellites vers la station de base au sol (SBS) et
- des moyens de détermination de la position absolue (DPA) d'au moins un des satellites (SAT1, SAT2, SAT3),
l'ensemble de satellites comprenant un satellite principal (SATP) et au moins un satellite secondaire (SATS1, SATS2), ledit satellite principal (SATP) comprenant ledit dispositif de transmission comprenant une unique antenne (ANT1_P), et étant adapté pour collecter l'ensemble desdits signaux reçus, desdites positions relatives et desdites datations (DATP, DATS1, DATS2) transmises par ledit ensemble de satellites, et les transmettre à ladite station de station de base au sol (SBS), et des moyens de détermination d'une localisation géographique (DLG) dudit émetteur (ES) disposés dans ledit satellite principal (SATP),
le dispositif secondaire d'interférométrie étant adapté pour fournir une localisation géographique approximative dudit émetteur (ES) adaptée pour servir d'initialisation pour une localisation géographique précise dudit émetteur (ES) par le dispositif principal d'interférométrie étendue.

2. Système selon la revendication 1, dans lequel lesdits moyens de détermination de la position absolue (DPA) d'au moins un des satellites comprennent au moins un émetteur au sol (EC) de localisation connue.

3. Système selon la revendication 1, dans lequel lesdits moyens de détermination de la position absolue (DPA) d'au moins un des satellites comprennent un récepteur d'un système de positionnement par satellites.

4. Système selon l'une des revendications précédentes, dans lequel au moins un desdits satellites comprend un dispositif de micro propulsion (MPi).

5. Système selon l'une des revendications précédentes, dans lequel lesdites antennes de réception (ANT1, ANT2, ANT3) sont adaptées pour recevoir des signaux RF.

6. Système selon l'une des revendications précédentes, dans lequel ledit dispositif de métrologie relative inter-satellites comprend un dispositif de Radio Fréquences de Vol en Formation.

7. Système selon la revendication 6, dans lequel ledit dispositif de métrologie relative inter-satellites comprend, en outre, un dispositif de métrologie optique.

## Patentansprüche

1. Geografisches Lokalisierungssystem mindestens eines Funksignalsenders (ES), welcher sich an der Erdoberfläche befindet, Folgendes beinhaltend:
- eine eine Hauptvorrichtung zur erweiterten Inteferometrie bildende Gruppe von Satelliten (SAT1, SAT2, SAT3), welche mit Empfangsantennen (ANTI, ANT2, ANT3) versehen sind, welche geeignet sind, die Signale zu empfangen,
- eine relative Intersatelliten-Messvorrichtung zum Bestimmen der relativen Positionen der Satelliten (SAT1, SAT2, SAT3) untereinander, welche mindestens einen zugewiesenen Sensor (CAPTd_1, CAPTd_2, CAPTd_3) für jeden Satelliten (SAT1, SAT2, SAT3) sowie Intersatelliten-Kommunikationsmittel (COMM1, COMM2, COMM3) beinhaltet,
- eine Datierungsvorrichtung (DAT1, DAT2, DAT3) der empfangenen Signale anhand der Bestimmung der relativen Positionen der Satelliten (SAT1, SAT2, SAT3) untereinander, abgegeben durch die relative Intersatelliten-Messvorrichtung, anhand von Messungen von Pseudodistanzen durch Korrelation von PRN-Code und durch Synchronisierung der Uhren der Satelliten durch Zeitübertragung zwischen Satelliten,
- eine sekundäre Interferometrievorrichtung, welche mindestens eine Gruppe von mindestens drei Antennen (ANT21_3, ANT22_3, ANT23_3) eines Satelliten beinhaltet,
- eine Basisstation am Boden (SBS),
- eine Übertragungsvorrichtung der an den Satelliten erfassten Messungen an die Basisstation am Boden (SBS) und
- Mittel zum Bestimmen der absoluten Position (DPA) von mindestens einem der Satelliten (SAT1, SAT2, SAT3),
wobei die Gruppe von Satelliten einen Hauptsatelliten (SATP) und mindestens einen sekundären Satelliten (SATS1, SATS2) beinhaltet, wobei der Hauptsatellit (SATP) die Übertragungsvorrichtung beinhaltet, welche eine einzige Antenne (ANT1_P) beinhaltet, und geeignet ist, um die Gesamtheit der empfangenen Signale, der relativen Positionen und der Datierungen (DATP, DATS1, DATS2) zu sammeln, welche von der Gruppe von Satelliten übertragen werden, und sie an die Basisstation am Boden (SBS) zu übertragen, und Mittel zum Bestimmen einer geografischen Lokalisierung (DLG) des Senders (ES) beinhaltet, welche in dem Hauptsatelliten (SATP) angeordnet sind, wobei die sekundäre Interferometrievorrichtung geeignet ist, eine annähernde geografische Lokalisierung des Senders (ES) bereitzustellen, welche geeignet ist, um zur Initialisierung für eine präzise geografische Lokalisierung des Senders (ES) durch die Hauptvorrichtung zur erweiterten Inteferometrie zu dienen.

2. System nach Anspruch 1, bei welchem die Mittel zum Bestimmen der absoluten Position (DPA) von mindestens einem der Satelliten mindestens einen Sender am Boden (EC) mit bekannter Lokalisierung beinhalten.

3. System nach Anspruch 1, bei welchem die Mittel zum Bestimmen der absoluten Position (DPA) von mindestens einem der Satelliten einen Empfänger eines satellitengestützten Positionierungssystems beinhalten.

4. System nach einem der vorhergehenden Ansprüche, bei welchem mindestens einer der Satelliten ein Mikroantriebssystem (MPi) beinhaltet.

5. System nach einem der vorhergehenden Ansprüche, bei welchem die Empfangsantennen (ANTI, ANT2, ANT3) geeignet sind, um HF-Signale zu empfangen.

6. System nach einem der vorhergehenden Ansprüche, bei welchem die relative Intersatelliten-Messvorrichtung eine Formationsflug-Funkfrequenzvorrichtung beinhaltet.

7. System nach Anspruch 6, bei welchem die relative Intersatelliten-Messvorrichtung zudem eine optische Messvorrichtung beinhaltet.

## Claims

1. A system for determining a geographical location of at least one radio signal transmitter (ES) located on the Earth's surface, the system comprising:
- a set of satellites (SAT1, SAT2, SAT3) provided with receiving antennas (ANTI, ANT2, ANT3) configured to receive said signals, forming a main extended interferometry device;
- an intersatellite relative metrology device configured to determine relative positions of said satellites (SAT1, SAT2, SAT3) to one another, comprising at least one dedicated sensor (CAPTd_1, CAPTd_2, CAPTd_3) of each satellite (SAT1, SAT2, SAT3) and intersatellite communicators (COMM1, COMM2, COMM3),
- a dating device (DAT1, DAT2, DAT3) for said received signals from said determination of the relative positions of said satellites (SAT1, SAT2, SAT3) to one another, provided by said intersatellite relative metrology device, based on measurements of pseudodistances by PRN code correlation and by clock synchronization of said satellites through time transfer between satellites,
- a secondary interferometry device comprising at least one set of at least three antennas (ANT21_3, ANT22_3, ANT23_3) of a satellite
- a ground base station (SBS),
- a transmission device of measurements acquired at the satellites to the ground base station (SBS); and
- means for determining an absolute position (DPA) of at least one of the satellites (SAT1, SAT2, SAT3),
the set of satellites comprising a main satellite (SATP) and at least one secondary satellite (SATS1, SATS2), said main satellite (SATP) comprising said transmission device comprising a single antenna (ANT1_P), and being configured to collect the set of said received signals, said relative positions and said datings (DATP, DATS1, DATS2) transmitted by said set of satellites, and to transmit these to said ground base station (SBS), and means for determining an geographical location (DLG) of said transmitter (ES) which are provided within said main satellite (SATP),
said secondary interferometry device being configured to provide an approximate geographical location of said transmitter (ES) configured for the initialization of a precise geographical location of said transmitter (ES) by the main extended interferometry device.

2. The system according to claim 1, wherein said means for determining the absolute position (DPA) of at least one of the satellites comprise at least one ground transmitter (EC) located at a known location.

3. The system according to claim 1, wherein said means for determining the absolute position (DPA) of at least one of the satellites comprise a receiver of a satellite positioning system.

4. The system according to any one of the preceding claims, wherein at least one of said satellites comprises a micropropulsion device (MPi).

5. The system according to any one of the preceding claims, wherein said receiving antennas (ANTI, ANT2, ANT3) are adapted to receive RF signals.

6. The system according to any one of the preceding claims, wherein said intersatellite relative metrology device comprises a Formation Flying Radio Frequency device.

7. The system according to claim 6, wherein said intersatellite relative metrology device further comprises an optical metrology device.
